(19) **Europäisches Patentamt**

**European Patent Office**

**Office européen des brevets**

(11) **EP 1 594 714 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(21) Anmeldenummer: **03815950.5**

(22) Anmeldetag: **13.12.2003**

(51) Int Cl.:
**B60K 31/00** (2006.01)    **G08G 1/16** (2006.01)

(86) Internationale Anmeldenummer:
**PCT/EP2003/014218**

(87) Internationale Veröffentlichungsnummer:
**WO 2004/074030 (02.09.2004 Gazette 2004/36)**

(54) **VERFAHREN ZUR REGELUNG DER FAHRGESCHWINDIGKEIT EINES FAHRZEUGS**

METHOD FOR CONTROLLING THE SPEED OF A VEHICLE

PROCEDE POUR REGLER LA VITESSE DE DEPLACEMENT D'UN VEHICULE

(84) Benannte Vertragsstaaten:
**DE ES FR GB IT**

(30) Priorität: **20.02.2003 DE 10307169**

(43) Veröffentlichungstag der Anmeldung:
**16.11.2005 Patentblatt 2005/46**

(73) Patentinhaber: **DaimlerChrysler AG**
**70567 Stuttgart (DE)**

(72) Erfinder: **MÖBUS, Rainer**
**70825 Korntal (DE)**

(56) Entgegenhaltungen:
EP-A- 0 934 846          DE-A- 10 018 554
DE-A- 19 624 615          DE-A- 19 637 245

**Beschreibung**

Die Erfindung betrifft ein Verfahren zur Regelung der Fahrgeschwindigkeit eines Fahrzeugs gemäß dem Oberbegriff des Patentanspruchs 1.

Derartige Verfahren und die Vorrichtungen zu deren Durchführung sind unter dem Namen "adaptive Fahrgeschwindigkeitsregelung" bzw. "Abstandsregeltempomat" hinlänglich bekannt. Diese Verfahren und Vorrichtungen ermöglichen bei freier Fahrbahn die Regelung der Fahrgeschwindigkeit eines Fahrzeugs auf einen vom Fahrer des Fahrzeugs vorgebbaren Wert. Steht jedoch ein vorausfahrendes Fremdfahrzeug dieser Regelung entgegen, wird das Fremdfahrzeug als Regelungsziel ausgewählt und die Fahrgeschwindigkeit des Fahrzeugs derart geregelt, daß dieses dem Regelungsziel in einem bestimmten geschwindigkeitsabhängigen Abstand folgt. Hierdurch wird die Fahrgeschwindigkeit des geregelten Fahrzeugs an jene des Regelungsziels angepaßt.

Die Detektion der vorausfahrenden Fremdfahrzeuge und die Ermittlung ihres Abstands zum geregelten Fahrzeug erfolgt üblicherweise mit einer am geregelten Fahrzeug vorgesehenen Radareinrichtung. Befinden sich mehrere Fremdfahrzeuge vor dem geregelten Fahrzeug, wird das relevanteste dieser Fahrzeuge als Regelungsziel ausgewählt und die Abstandsregelung ausschließlich auf dieses Regelungsziel durchgeführt.

In der EP 716 949 B1 wird ein Verfahren sowie eine daraufberuhende Vorrichtung beschrieben, bei dem ein auf einer schnelleren Nachbarspur vorausfahrendes Fremdfahrzeug als neues Regelungsziel ausgewählt wird, wenn die Gefahr besteht, daß es ansonsten vom geregelten Fahrzeug rechtswidrig überholt werden würde.

In der DE 10018554A wird ein gattungsgemäßes Verfahren beschrieben.

Der wesentliche Nachteil der vorbekannten Verfahren liegt darin, daß ein einscherendes Fremdfahrzeug aufgrund der hierdurch bewirkten Änderung des Regelungsziels zu unangenehmen Bremsvorgängen führen kann. Im ungünstigsten Fall reagiert die Vorrichtung zu spät auf das einscherende Fremdfahrzeug, so daß ein Zusammenstoß mit diesem Fahrzeug unter Umständen nicht mehr vermeidbar ist.

Der Erfindung liegt daher die Aufgabe zugrunde, das Verfahren gemäß dem Oberbegriff des Patentanspruchs 1 dahingehend zu verbessern, daß die Fahrsicherheit und der Fahrkomfort erhöht werden.

Die Aufgabe wird durch die Merkmale des Patentanspruchs 1 gelöst. Vorteilhafte Ausgestaltungen und Weiterbildungen ergeben sich aus den Unteransprüchen.

Das erfindungsgemäße Verfahren basiert auf einer vorausschauenden Bewertung der künftigen Verkehrssituation unter Berücksichtigung der dem geregelten Fahrzeug in dessen Fahrspur oder in einer benachbarten Fahrspur vorausfahrenden Fremdfahrzeuge. Die vorausschauende Betrachtung ermöglicht eine rechtzeitige Reaktion auf ein vor das geregelte Fahrzeug einscherendes Fremdfahrzeug. Die künftige Verkehrssituation wird dabei anhand von Bewegungsparametern der vorausfahrenden Fahrzeuge prädiziert, wobei die Prädiktion in Abhängigkeit der als freier Parameter vorgebbaren Sollbeschleunigung des geregelten Fahrzeugs erfolgt. Bei den Bewegungsparametern handelt es sich jeweils um die auf das geregelte Fahrzeug bezogene relative Position und Geschwindigkeit der vorausfahrenden Fremdfahrzeuge und vorzugsweise zusätzlich auch um die Beschleunigung der vorausfahrenden Fremdfahrzeuge.

Die Bewertung der zukünftigen Verkehrssituation erfolgt anhand einer Kostenfunktion, die derart definiert ist, daß ihr Wert mit der Anzahl der vorausfahrenden und für das geregelte Fahrzeug relevanten Fremdfahrzeuge und mit der Relevanz dieser Fahrzeuge zunimmt. Dabei wird die Sollbeschleunigung des geregelten Fahrzeugs ermittelt, bei dem die Kostenfunktion einen Minimalwert annehmen würde. Dieser Wert wird anschließend als Beschleunigungssollwert der Regelung der Beschleunigung des geregelten Fahrzeugs zugrundegelegt. Die Fahrgeschwindigkeitsregelung basiert somit auf einer Beschleunigungsregelung.

Bei dem erfindungsgemäßen Verfahren wird nicht wie beim Stand der Technik ausschließlich eines der Fremdfahrzeuge als Regelungsziel ausgewählt, es findet vielmehr eine Abwägung dahingehend statt, welches der Fremdfahrzeuge in welchem Maße einen beschränkenden Einfluß auf Fahrt des geregelten Fahrzeugs hat und die Fremdfahrzeuge werden entsprechend ihrer Relevanz bei der Ermittlung der die Fahrgeschwindigkeit des geregelten Fahrzeugs bestimmenden optimalen Beschleunigung berücksichtigt.

Vorzugsweise werden solche Fremdfahrzeuge als relevant angesehen, die dem geregelten Fahrzeugs in dessen Fahrspur in einem den Sicherheitsabstand unterschreitenden Abstand vorausfahren, wobei die Relevanz um so höher ist, je mehr der Sicherheitsabstand unterschritten wird, d. h. die Relevanz der Fremdfahrzeuge nimmt mit zunehmender Unterschreitung des Sicherheitsabstands zu.

Vorzugsweise werden weiterhin auch solche Fremdfahrzeuge als relevant angesehen, die dem geregelten Fahrzeug auf einer benachbarten schnelleren Fahrspur vorausfahren. Mit dieser Einschränkung ist es möglich, sicherzustellen, daß Fremdfahrzeuge nicht auf einer langsameren Fahrspur überholt werden. Dies ist beispielsweise für Länder wie Deutschland sinnvoll, deren Rechtsnormen ein Rechtsüberholverbot auf bestimmten Straßen vorsehen. Entsprechend kann auch in Ländern mit Linksverkehr die Einhaltung eines Linksüberholverbots gewährleistet werden.

In einer vorteilhaften Ausgestaltung des Verfahrens wird die Kostenfunktion wie folgt definiert

$$J(a) = Q_0 \bullet f_0(a) + \sum_{i=1}^{i=n} (Q_i \bullet f_i(a)),$$

wobei

i      ein die vorausfahrende Fremdfahrzeuge identifizierender Index ist,

a      die als freier Parameter in die Prädiktion eingehende Sollbeschleunigung des geregelten Fahrzeugs ist,

$f_0(a)$      eine dem geregelten Fahrzeug zugeordnete Bewertungsfunktion ist, die vom Differenzbetrag zwischen der prädizierten Fahrgeschwindigkeit des geregelten Fahrzeugs und einer vom Fahrer vorgegebenen Wunschgeschwindigkeit abhängig ist,

$f_i(a)$      eine dem i-ten vorausfahrenden Fremdfahrzeug zugeordnete Bewertungsfunktion ist, die von der prädizierten Unterschreitung des Sicherheitsabstands des geregelten Fahrzeugs zum i-ten vorausfahrenden Fremdfahrzeug abhängig ist,

$Q_0$      ein dem geregelten Fahrzeug zugeordneter Gewichtungsfaktor ist und

$Q_i$      ein dem i-ten vorausfahrenden Fremdfahrzeug zugeordneter Gewichtungsfaktor ist.

Vorzugsweise wird die dem i-ten Fremdfahrzeug zugeordnete Bewertungsfunktion $f_i(a)$ dabei gemäß der Vorschrift

$$f_i(a) = |d_{min} - d_i(a)|^k$$

definiert. Hierbei stellt

$d_{min}$      den geforderten Sicherheitsabstand des geregelten Fahrzeugs zu einem vorausfahrenden Fahrzeug dar,

$d_i(a)$      den von der Sollbeschleunigung des geregelten Fahrzeugs abhängigen prädizierten Längsabstand des geregelten Fahrzeugs zum i-ten Fremdfahrzeug dar und

k      einen Exponenten mit $k \geq 1$ dar, der zweckmäßigerweise auf den Wert 2 gesetzt wird.

Der dem i-ten Fremdfahrzeug zugeordnete Gewichtungsfaktor $Q_i$ wird vorzugsweise auf einen vorgegebenen positiven Wert gesetzt wird, wenn das i-te Fremdfahrzeug für das geregelte Fahrzeug relevant ist und ansonsten auf den Wert Null gesetzt.
Vorzugsweise wird die dem geregelten Fahrzeug zugeordnete Bewertungsfunktion $f_0(a)$ gemäß der Vorschrift

$$f_0(a) = |v_0(a) - v_{ref}|^j$$

definiert, wobei

$v_{ref}$      die vom Fahrer vorgegebene Wunschgeschwindigkeit darstellt, auf die die Fahrgeschwindigkeit des geregelten Fahrzeugs bei freier Fahrbahn geregelt werden soll,

$v_0(a)$      die von der Sollbeschleunigung des geregelten Fahrzeugs abhängige prädizierte Fahrgeschwindigkeit des geregelten Fahrzeugs darstellt und

j      einen Exponenten mit $j \geq 1$ darstellt, der zweckmäßigerweise auf den Wert 2 gesetzt wird.

Der dem geregelten Fahrzeug zugeordnete Gewichtungsfaktor $Q_0$ wird vorzugsweise derart vorgegeben, daß die Abweichung zwischen der Fahrgeschwindigkeit und Wunschgeschwindigkeit bei freier Fahrbahn mit einer bestimmten Regelgeschwindigkeit ausgeregelt wird.

Vorzugsweise wird der Beschleunigungssollwert auf technisch realisierbare Beschleunigungswerte begrenzt. Vorteilhafterweise wird auch die Änderung des Beschleunigungssollwerts auf einen vorgegebenen Maximalwert begrenzt, um übermäßige Sollwertsprünge, die zu Komforteinbußen führen könnten, zu vermeiden.

In einer vorteilhaften Weiterbildung der Verfahrens wird der Beschleunigungssollwert iterativ in mehreren Iterationsschritten ermittelt und erst nach einer vorgegebenen Anzahl von Iterationsschritten als Sollwert der Beschleunigungsregelung zugrundegelegt.

Die Erfindung wird nachfolgend anhand eines Ausführungsbeispiels und anhand von Figuren näher erläutert. Es zeigen:

Fig. 1     eine schematische Darstellung einer Verkehrssituation,

Fig. 2     ein Flußdiagramm zur Durchführung des erfindungsgemäßen Verfahrens.

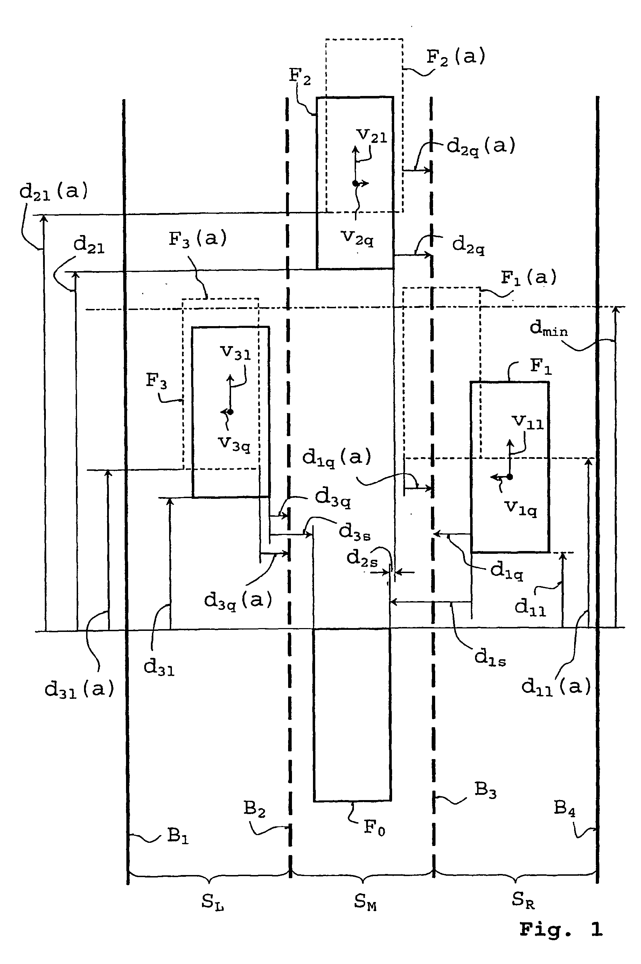

Figur 1 zeigt in einer Draufsicht die schematische Darstellung einer Verkehrssituation auf einer dreispurigen Straße, deren Fahrspuren $S_L$, $S_M$, $S_R$ durch Fahrspurbegrenzungslinien $B_1$, $B_2$, $B_3$, $B_4$ markiert sind. In der Figur ist das Fahrzeug, dessen Fahrgeschwindigkeit $v_0$ geregelt werden soll, mit dem Bezugszeichen $F_0$ bezeichnet. Dieses Fahrzeug wird nachfolgend als geregeltes Fahrzeug bezeichnet. Es weist Stellmittel zur Erzeugung von Stellsignalen auf, die zum Zwecke einer Beschleunigungsregelung dem Motor, dem Getriebe und/oder der Fahrzeugbremse zugeführt werden.

Die Figur zeigt des weiteren drei dem geregelten Fahrzeug $F_0$ vorausfahrende Fahrzeuge $F_1$, $F_2$, $F_3$, welche nachfolgend als Fremdfahrzeuge bezeichnet werden. Zudem sind die Längsgeschwindigkeiten $v_{1l}$, $v_{2l}$, $V_{3l}$ und Quergeschwindigkeiten $v_{1q}$, $v_{2q}$, $v_{3q}$ der Fremdfahrzeuge $F_1$, $F_2$, $F_3$ sowie deren Längsabstände $d_{1l}$, $d_{2l}$, $d_{3l}$ und Seitenabstände $d_{1s}$, $d_{2s}$, $d_{3s}$ zum geregelten Fahrzeug $F_0$ und deren Querabstände $d_{1q}$, $d_{2q}$, $d_{3q}$ zur Fahrspur $S_M$ des geregelten Fahrzeugs $F_0$ dargestellt. Weiterhin sind in der Figur zukünftige Positionen $F_1(a)$, $F_2(a)$, $F_3(a)$ der Fremdfahrzeuge $F_1$, $F_2$, $F_3$ durch gestrichelte Linien angedeutet. Es handelt sich hierbei um die Positionen, die die Fremdfahrzeuge $F_1$, $F_2$, $F_3$ nach Ablauf einer vorgegebenen Zeit, beispielsweise nach Ablauf von 2 Sekunden, voraussichtlich einnehmen werden. Die sich dann ergebenden Längsabstände und Querabstände sind mit $d_{1l}(a)$, $d_{2l}(a)$, $d_{3l}(a)$ bzw. mit $d_{1q}(a)$, $d_{2q}(a)$, $d_{3q}$ (a) bezeichnet. Dargestellt ist in der Figur noch der von der Fahrgeschwindigkeit des geregelten Fahrzeugs $F_0$ abhängige Sicherheitsabstand $d_{min}$ des geregelten Fahrzeugs $F_0$, welcher aus Sicherheitsgründen nicht unterschritten werden sollte.

Das geregelte Fahrzeug $F_0$ umfaßt ein Radarsystem als Mittel zur Detektion der vorausfahrenden Fremdfahrzeuge $F_1$, $F_2$, $F_3$ und zur Ermittlung der Bewegungsparameter dieser Fahrzeuge. Selbstverständlich können diese Mittel auch als Infrarotsystem oder als Bildaufnahme- und Bildverarbeitungssystem ausgeführt sein. Als Bewegungsparameter werden die Größen: Position und Geschwindigkeit der Fremdfahrzeuge $F_1$, $F_2$, $F_3$ sowie optional auch deren Beschleunigung ermittelt. Diese vektoriellen Größen werden dabei als Relativgrößen mit dem geregelten Fahrzeug $F_0$ als Bezugspunkt ermittelt.

Das geregelte Fahrzeug $F_0$ umfaßt weiterhin Bildaufnahme- und Bildverarbeitungsmittel zur Detektion der Fahrspurkrümmung anhand des Verlaufs der Fahrspurbegrenzungslinien $B_2$, $B_3$. Damit lassen sich die Querabstände $d_{1q}$, $d_{2q}$, $d_{3q}$ auch für gekrümmte Fahrspuren aus den Seitenabständen $d_{1s}$, $d_{2s}$, $d_{3s}$ der Fremdfahrzeuge $F_1$, $F_2$, $F_3$ zu dem geregelten Fahrzeug $F_0$ und der Position des geregelten Fahrzeugs $F_0$ innerhalb seiner Fahrspur $S_M$ ermitteln.

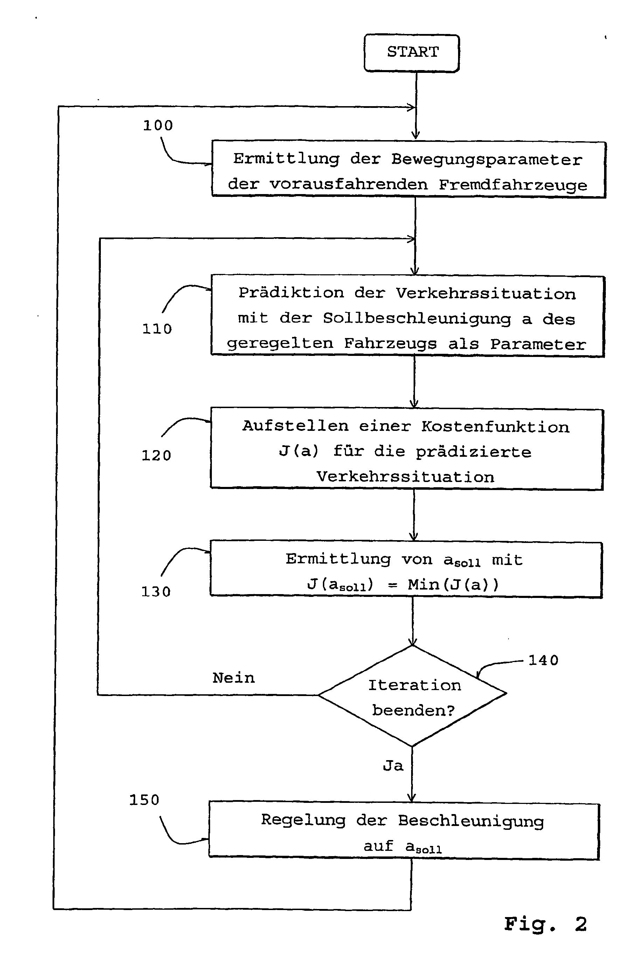

Das erfindungsgemäße Verfahren wird nachfolgend für die in Figur 1 dargestellte Verkehrssituation anhand des Flußdiagramms gemäß Figur 2 beschrieben.

Gemäß Figur 2 werden im Schritt 100 die Bewegungsparameter der vorausfahrenden Fremdfahrzeuge $F_1$, $F_2$, $F_3$ ermittelt, d.h. deren Längs- und Seitenabstände $d_{1l}$, $d_{2l}$, $d_{3l}$ bzw. $d_{1s}$, $d_{2s}$, $d_{3s}$ zum geregelten Fahrzeug $F_0$ sowie deren Längs- und Quergeschwindigkeiten $v_{1l}$, $v_{2l}$, $v_{3l}$ bzw. $v_{1q}$, $v_{2q}$, $v_{3q}$ und optional auch deren Längs- und Querbeschleunigungen. Die Entscheidung, ob eine Fahrzeug vorausfährt wird anhand seiner absoluten Geschwindigkeit getroffen, welche aus der Relativgeschwindigkeit dieses Fahrzeugs bezüglich dem geregelten Fahrzeug $F_0$ und der absoluten Fahrgeschwindigkeit des geregelten Fahrzeugs $F_0$ ermittelbar ist. Stehende oder entgegenkommende Objekte werden nicht berücksichtigt. Im Schritt 100 wird zudem der Verlauf der Fahrspur $S_M$ des geregelten Fahrzeugs $F_0$, die Fahrgeschwindigkeit des geregelten Fahrzeugs $F_0$ und die Position des geregelten Fahrzeugs $F_0$ innerhalb der Fahrspur $S_M$ ermittelt.

Im nächsten Schritt 110 wird mit den nun bekannten Bewegungsparametern die zukünftige Verkehrssituation prädiziert, d. h. es werden die Positionen $F_1(a)$, $F_2(a)$, $F_3(a)$ ermittelt, die die Fremdfahrzeuge $F_1$, $F_2$, $F_3$ nach Ablauf einer bestimmten Zeit voraussichtlich einnehmen werden. Dabei erfolgt die Prädiktion in Abhängigkeit der Sollbeschleunigung a des geregelten Fahrzeugs $F_0$, welche als freier Parameter, d. h. als variierbare Größe in das Prädiktionsergebnis eingeht.

Die Sollbeschleunigung a ist diejenige Größe, über die die zukünftige Verkehrssituation vom geregelten Fahrzeug $F_0$ aus beeinflußt werden kann. Es ist nun Aufgabe des Verfahrens den zu einer optimalen Verkehrssituation zugehörigen Wert der Sollbeschleunigung a zu finden und diese optimale Verkehrssituation durch Regelung der Beschleunigung auf den gefundenen Wert zu verwirklichen.

Um dies zu erreichen wird in Schritt 120 eine Kostenfunktion J(a) für die prädizierte Verkehrssituation aufgestellt und die Verkehrssituation mit der Kostenfunktion J(a) bewertet.

Die Kostenfunktion J(a) wird dabei gemäß der Beziehung

$$J(a) = Q_0 \bullet f_0(a) + \sum_{i=1}^{i=n} (Q_i \bullet f_i(a))$$

definiert wird, wobei

i    ein den Fremdfahrzeugen $F_1$, $F_2$, $F_3$ jeweils eindeutig zugeordneter Index mit i = 1, 2, ... n ist,

n    ein die Anzahl der Fremdfahrzeuge $F_1$, $F_2$, $F_3$ repräsentierender Wert ist,

a    die als freier Parameter in die Prädiktion eingehende Sollbeschleunigung a des geregelten Fahrzeugs $F_0$ ist,

$f_0(a)$    eine dem geregelten Fahrzeug $F_0$ zugeordnete Bewertungsfunktion ist,

$f_i(a)$    eine dem i-ten Fremdfahrzeug $F_i$ zugeordnete Bewertungsfunktion ist,

$Q_0$    ein dem geregelten Fahrzeug $F_0$ zugeordneter Gewichtungsfaktor ist und

$Q_i$    ein dem i-ten Fremdfahrzeug zugeordneter Gewichtungsfaktor ist.

Für den in Figur 1 dargestellten Fall mit n = 3 Fremdfahrzeugen $F_1$, $F_2$, $F_3$ erhält man dann als Kostenfunktion J(a) die Funktion

$$J(a) = Q_0 \bullet f_0(a) + Q_1 \bullet f_1(a) + Q_2 \bullet f_2(a) + Q_3 \bullet f_3(a).$$

Die Bewertungsfunktion $f_0(a)$ wird gemäß der Vorschrift

$$f_0(a) = |v_0(a) - v_{ref}|^j$$

definiert, wobei $v_{ref}$ eine vom Fahrer vorgegebene Wunschgeschwindigkeit darstellt, auf die die Fahrgeschwindigkeit bei freier Fahrbahn geregelt werden soll, $v_0(a)$ die in Abhängigkeit der Sollbeschleunigung a prädizierte Fahrgeschwindigkeit des geregelten Fahrzeugs $F_0$ darstellt und j einen Exponenten mit j ≥ 1 darstellt, der zweckmäßigerweise gleich dem Wert 2 gewählt wird, weil dann die Betragsbildung entfällt.

Die Bewertungsfunktion $f_i(a)$ wird gemäß der Vorschrift

$$f_i(a) = |d_{min} - d_i(a)|^k$$

definiert, wobei $d_{min}$ den geschwindigkeitsabhängigen Sicherheitsabstand des geregelten Fahrzeugs $F_0$ zu einem vorausfahrenden Fahrzeug darstellt, $d_i(a)$ den in Abhängigkeit der Sollbeschleunigung a prädizierten Längsabstand $d_{il}(a)$ des i-ten Fremdfahrzeugs $F_i$ zum geregelten Fahrzeugs $F_0$ darstellt und k einen Exponenten mit k ≥ 1 darstellt, der zweckmäßigerweise gleich dem Wert 2 gewählt wird.

Der Gewichtungsfaktor $Q_i$ wird auf einen vorgegebenen positiven Wert, beispielsweise auf den Wert 1 gesetzt, wenn das i-te Fremdfahrzeug $F_i$ für die Regelung des geregelten Fahrzeugs $F_0$ relevant ist, ansonsten wird er auf den Wert 0 gesetzt. Dadurch wird sichergestellt, daß nichtrelevante Fremdfahrzeuge keinen Beitrag zur Kostenfunktion $J(a)$ liefern.

Ein Fremdfahrzeug $F_i$ wird dabei als relevant angesehen, wenn es sich gemäß der Prädiktion voraussichtlich auf der Fahrspur $S_M$ des geregelten Fahrzeugs $F_0$ befinden wird und wenn sein prädizierter Längsabstand $d_{il}(a)$ zum geregelten Fahrzeug $F_0$ den Sicherheitsabstand $d_{min}$ des geregelten Fahrzeugs $F_0$ voraussichtlich unterschreiten wird. Die Entscheidung, ob das Fremdfahrzeug $F_i$ sich auf der Fahrspur $S_M$ des geregelten Fahrzeugs $F_0$. befindet, wird dabei anhand seines prädizierten Querabstands $d_{iq}(a)$ zur Fahrspur $S_M$ des geregelten Fahrzeugs $F_0$ getroffen. Der Querabstand $d_{iq}(a)$ wird dabei aus dem ermittelten Verlauf der Fahrspur $S_M$ des geregelten Fahrzeugs $F_0$, der Position des geregelten Fahrzeugs $F_0$ innerhalb seiner Fahrspur $S_M$ und aus dem Seitenabstand $d_{is}$ des i-ten Fahrzeugs $F_i$ zum geregelten Fahrzeug $F_0$ ermittelt.

Bei dem in Figur 1 dargestellten Fall würde sich nur das mit dem Index i = 1 indizierte Fremdfahrzeug $F_1$ voraussichtlich auf der Fahrspur $S_M$ des geregelten Fahrzeugs $F_0$ innerhalb von dessen Sicherheitsabstand $d_{min}$ befinden. Damit wären die Gewichtungsfaktoren $Q_i$ wie folgt zu setzen: $Q_1 = 1$ und $Q_2 = Q_3 = 0$.

Es ist jedoch vorteilhaft, auch solche Fremdfahrzeuge als relevant anzusehen, die sich zwar auf einer Nachbarspur befinden, deren Überholung jedoch aufgrund von nationalen Rechtsnormen rechtswidrig wäre. Damit kann sichergestellt werden, daß kein rechtswidriger Überholvorgang durchgeführt wird, beispielsweise durch Überholen auf der rechten Fahrspur. Wenn in dem in Figur 1 dargestellten Fall das mit dem Index i = 3 indizierte Fremdfahrzeug $F_3$ auf der mittleren Fahrspur $S_M$ nicht überholt werden soll, wären die Gewichtungsfaktoren $Q_i$ wie folgt zu setzen: $Q_1 = Q_3 = 1$ und $Q_2 = 0$.

Der dem i-ten Fremdfahrzeug $F_i$ zugeordnete Gewichtungsfaktor $Q_i$ wird somit in Abhängigkeit des prädizierten Längsabstands $d_{il}(a)$ zwischen dem i-ten Fremdfahrzeug $F_i$ und dem geregelten Fahrzeug $F_0$, in Abhängigkeit des geschwindigkeitsabhängigen Sicherheitsabstands $d_{min}$ des geregelten Fahrzeugs $F_0$ sowie in Abhängigkeit davon, ob das i-te Fremdfahrzeug $F_i$ sich links oder rechts des geregelten Fahrzeugs $F_0$ auf einer benachbarten Fahrspur befindet, vorgegeben.

Der dem geregelten Fahrzeug $F_0$ zugeordnete Gewichtungsfaktor $Q_0$ bestimmt die Regelrate, d. h. die Regelgeschwindigkeit, mit der die Fahrgeschwindigkeit des geregelten Fahrzeug $F_0$ bei freier Fahrbahn auf die Wunschgeschwindigkeit $v_{ref}$ geregelt wird. Er wird entsprechend der geforderten Regelgeschwindigkeit gewählt. Nach dem Aufstellen der Kostenfunktion $J(a)$ wird im Schritt 130 derjenige Wert der Sollbeschleunigung a als Beschleunigungssollwert $a_{soll}$ ermittelt, bei dem die Kostenfunktion $J(a)$ ihren Minimalwert annimmt.

Der Beschleunigungssollwert $a_{soll}$ läßt sich durch mehrere Iterationsschritte verfeinern. Dazu wird im nächsten Schritt 140 geprüft, ob die Schritte 110, 120, 130 eine bestimmte Anzahl mal, beispielsweise 3 mal wiederholt wurden. Trifft dies zu, wird zu Schritt 150 verzweigt, ansonsten wird zu Schritt 110 verzweigt. Es ist selbstverständlich auch denkbar, auf Schritt 140 zu verzichten und den Schritt 150 unmittelbar nach Schritt 130 durchzuführen.

Im Schritt 150 wird dann die Beschleunigung des geregelten Fahrzeugs $F_0$ auf den Beschleunigungssollwert $a_{soll}$ geregelt, indem entsprechende, auf den Motor, das Getriebe und/oder die Bremsen des geregelten Fahrzeugs $F_0$ wirkende Stellsignale erzeugt werden.

Auf Schritt 150 folgt wiederum Schritt 100, um die Bewegungsparameter der Fremdfahrzeuge zu aktualisieren und den Beschleunigungssollwert $a_{soll}$ an die aktuelle Verkehrssituation anzupassen.

**Patentansprüche**

1. Verfahren zur Regelung der Fahrgeschwindigkeit eines Fahrzeugs ($F_0$) unter Berücksichtigung von vorausfahrenden Fremdfahrzeugen ($F_1$, $F_2$, $F_3$), deren jeweilige Position ($d_{1s}$, $d_{2s}$, $d_{3s}$, $d_{1l}$, $d_{2l}$, $d_{3l}$) und Geschwindigkeit ($v_{1s}$, $v_{2s}$, $V_{3s}$, $v_{1l}$, $v_{2l}$, $v_{3l}$) bezüglich dem geregelten Fahrzeug ($F_0$) als Bewegungsparameter ermittelt werden, umfassend den Schritt

    (a) Prädiktion der zukünftigen Verkehrssituation anhand der Bewegungsparameter ($d_{1s}$, $d_{2s}$, $d_{3s}$, $d_{1l}$, $d_{2l}$, $d_{3l}$, $v_{1s}$, $v_{2s}$, $v_{3s}$, $v_{1l}$, $v_{2l}$, $v_{3l}$) der vorausfahrenden Fremdfahrzeuge ($F_1$, $F_2$, $F_3$) in Abhängigkeit der als freier Parameter vorgebbaren Sollbeschleunigung (a) des geregelten Fahrzeugs ($F_0$),
    **gekennzeichnet durch**, folgende Verfahrensschritte
    (b) Bewertung der zukünftigen Verkehrssituation anhand einer Kostenfunktion ($J(a)$), die derart definiert ist, daß ihr Wert mit der Anzahl der vorausfahrenden und für das geregelte Fahrzeug ($F_0$) relevanten Fremdfahrzeuge ($F_1$, $F_2$, $F_3$) und mit der Relevanz dieser Fremdfahrzeuge ($F_1$, $F_2$, $F_3$) zunimmt,
    (c) Ermittlung eines Beschleunigungssollwerts ($a_{soll}$) als Wert der Sollbeschleunigung (a) des geregelten Fahrzeugs ($F_0$), bei dem die Kostenfunktion ($J(a)$) einen Minimalwert annimmt,

(d) Regelung der Beschleunigung des geregelten Fahrzeugs ($F_0$) auf den Beschleunigungssollwert ($a_{soll}$).

2. Verfahren nach Anspruch 1,
   **dadurch gekennzeichnet,**
   **daß** solche Fremdfahrzeuge ($F_1$, $F_2$, $F_3$) als relevant angesehen werden, die dem geregelten Fahrzeug ($F_0$) in dessen Fahrspur ($S_M$) in einem den Sicherheitsabstand ($d_{min}$) unterschreitenden Abstand vorausfahren und daß die Relevanz dieser Fremdfahrzeuge mit zunehmender Unterschreitung des Sicherheitsabstands ($d_{min}$) zunimmt.

3. Verfahren nach Anspruch 2,
   **dadurch gekennzeichnet,**
   **daß** auch solche Fremdfahrzeuge ($F_1$, $F_2$, $F_3$) als relevant angesehen werden, die in einer benachbarten schnelleren Fahrspur ($S_L$) dem geregelten Fahrzeug ($F_0$) vorausfahren.

4. Verfahren nach einem der vorherigen Ansprüche,
   **dadurch gekennzeichnet,**
   **daß** die Beschleunigung der vorausfahrenden Fremdfahrzeuge ($F_1$, $F_2$, $F_3$) als weiterer Bewegungsparameter dieser Fahrzeuge ermittelt und der Prädiktion der Verkehrssituation zugrundegelegt wird.

5. Verfahren nach einem der vorherigen Ansprüche,
   **dadurch gekennzeichnet,**
   **daß** die Kostenfunktion ($J(a)$) gemäß der Beziehung

$$J(a) = Q_0 \bullet f_0(a) + \sum_{i=1}^{i=n} (Q_i \bullet f_i(a))$$

definiert wird, wobei

i ein die vorausfahrenden Fremdfahrzeuge ($F_1$, $F_2$, $F_3$) identifizierender Index ist,
a die als Parameter in die Prädiktion eingehende Sollbeschleunigung des geregelten Fahrzeugs ($F_0$) ist,
$f_0(a)$ eine dem geregelten Fahrzeug ($F_0$) zugeordnete Bewertungsfunktion ist, die vom Differenzbetrag zwischen der prädizierten Fahrgeschwindigkeit ($v_0(a)$) des geregelten Fahrzeugs ($F_0$) und einer vom Fahrer vorgegebenen Wunschgeschwindigkeit ($v_{ref}$) abhängig ist,
$f_i(a)$ eine dem i-ten vorausfahrenden Fremdfahrzeug ($F_i$) zugeordnete Bewertungsfunktion ist, die von der prädizierten Unterschreitung des Sicherheitsabstands ($d_{min}$) des geregelten Fahrzeugs ($F_0$) zum i-ten vorausfahrenden Fremdfahrzeug ($F_i$) abhängig ist,
$Q_0$ ein dem geregelten Fahrzeug ($F_0$) zugeordneter Gewichtungsfaktor ist,
$Q_i$ ein dem i-ten vorausfahrenden Fremdfahrzeug ($F_i$) zugeordneter Gewichtungsfaktor ist.

6. Verfahren nach Anspruch 5,
   **dadurch gekennzeichnet,**
   **daß** die dem i-ten Fremdfahrzeug ($F_i$) zugeordnete Bewertungsfunktion $f_i(a)$ der Vorschrift

$$f_i(a) = |d_{min} - d_i(a)|^k$$

entspricht, wobei

$d_{min}$ den Sicherheitsabstand ($d_{min}$) des geregelten Fahrzeugs ($F_0$) zu einem vorausfahrenden Fahrzeug darstellt,
$d_i(a)$ den von der Sollbeschleunigung (a) des geregelten Fahrzeugs ($F_0$) abhängigen prädizierten Längsabstand ($d_{1l}(a)$, $d_{2l}(a)$, $d_{3l}(a)$) des geregelten Fahrzeugs ($F_0$) zum i-ten Fremdfahrzeug ($F_i$) darstellt,
k einen Exponenten mit $k \geq 1$ darstellt.

7. Verfahren nach Anspruch 5 oder 6,
   **dadurch gekennzeichnet ,**

**daß** der dem i-ten Fremdfahrzeug (F$_i$) zugeordnete Gewichtungsfaktor (Q$_i$) auf einen vorgegebenen positiven Wert gesetzt wird, wenn das i-te Fremdfahrzeug (F$_i$) für das geregelte Fahrzeug (F$_0$) relevant ist und ansonsten auf den Wert Null gesetzt wird.

8. Verfahren einem der Ansprüche 5 bis 7,
**dadurch gekennzeichnet ,**
**daß** die dem geregelten Fahrzeug (F$_0$) zugeordnete Bewertungsfunktion f$_0$(a) der Vorschrift

$$f_0(a) = |v_0(a) - v_{ref}|^j$$

entspricht, wobei

v$_{ref}$ die vom Fahrer des geregelten Fahrzeugs (F$_0$) vorgegebene Wunschgeschwindigkeit darstellt,
v$_0$(a) die von der Sollbeschleunigung (a) des geregelten Fahrzeugs (F$_0$) abhängige prädizierte Fahrgeschwindigkeit des geregelten Fahrzeugs (F$_0$) darstellt,
j einen Exponenten mit j $\geq$ 1 darstellt.

9. Verfahren nach einem der Ansprüche 5 bis 8,
**dadurch gekennzeichnet,**
**daß** der dem geregelten Fahrzeug (F$_0$) zugeordnete Gewichtungsfaktor (Q$_0$) in Abhängigkeit einer gewünschten Regelgeschwindigkeit vorgegeben wird, mit der die Fahrgeschwindigkeit des geregelten Fahrzeugs (F$_0$) bei freier Fahrbahn auf die Wunschgeschwindigkeit (v$_{ref}$) geregelt werden soll.

10. Verfahren nach einem der Ansprüche 5 bis 9,
**dadurch gekennzeichnet,**
**daß** der Beschleunigungssollwert (a$_{soll}$) auf technisch realisierbare Werte begrenzt wird und die Änderung des Beschleunigungssollwerts auf einen vorgegebenen Maximalwert begrenzt wird.

11. Verfahren nach einem der vorherigen Ansprüche,
**dadurch gekennzeichnet,**
**daß** die Verfahrensschritte a bis c vor der Durchführung des Verfahrensschrittes d eine vorgegebene Anzahl mal wiederholt werden.

**Claims**

1. Method for controlling the speed of a vehicle (F$_0$) taking into account other vehicles (F$_1$, F$_2$, F$_3$) which are travelling in front and whose respective position (d$_{1s}$, d$_{2s}$, d$_{3s}$, d$_{1l}$, d$_{2l}$, d$_{3l}$) and speed (v$_{1s}$, v$_{2s}$, v$_{3s}$, v$_{1l}$, v$_{2l}$, v$_{3l}$) are determined with respect to the controlled vehicle (F$_0$) as movement parameters, comprising the step

   (a) prediction of the future traffic situation by reference to the movement parameters (d$_{1s}$, d$_{2s}$, d$_{3s}$, d$_{1l}$, d$_{2l}$, d$_{3l}$, v$_{1s}$, v$_{2s}$, v$_{3s}$, v$_{1l}$, v$_{2l}$, v$_{3l}$) of the other vehicles (F$_1$, F$_2$, F$_3$) which are travelling in front as a function of the setpoint acceleration (a) of the controlled vehicle (F$_0$) which can be predefined as a free parameter,
   **characterized by** the following method steps
   (b) evaluation of the future traffic situation by reference to a cost function (J(a)) which is defined in such a way that its value increases with the number of the other vehicles (F$_1$, F$_2$, F$_3$) which are travelling in front and are relevant to the controlled vehicle (F$_0$) and increases with the relevance of these other vehicles (F$_1$, F$_2$, F$_3$),
   (c) determination of an acceleration setpoint value (a$_{soll}$) as a value of the setpoint acceleration (a) of the controlled vehicle (F$_0$) at which the cost function (J(a)) assumes a minimum value,
   (d) adjustment of the acceleration of the controlled vehicle (f$_0$) to the acceleration setpoint value (a$_{soll}$).

2. Method according to Claim 1, **characterized in that** other vehicles (F$_1$, F$_2$, F$_3$) which are travelling in front of the controlled vehicle (F$_0$) in its lane (S$_M$) at a distance which is less than the safety distance (d$_{min}$) are considered relevant, and **in that** the relevance of these other vehicles increases as the distance by which the safety distance (d$_{min}$) is undershot increases.

3. Method according to Claim 2, **characterized in that** other vehicles ($F_1$, $F_2$, $F_3$) which are travelling in front of the controlled vehicle ($F_0$) in an adjacent, faster lane ($S_L$) are considered relevant.

4. Method according to one of the preceding claims, **characterized in that** the acceleration of the other vehicles ($F_1$, $F_2$, $F_3$) which are travelling in front is determined as a further movement parameter for these vehicles and is used as a basis for predicting the traffic situation.

5. Method according to one of the preceding claims, **characterized in that** the cost function ($J(a)$) is defined according to the relationship

$$J(a) \ = \ Q_0 \bullet f_0(a) \ + \ \sum_{i=l}^{i=n}(Q_i \bullet f_i(a))$$

where

i is an index which identifies the other vehicles ($F_1$, $F_2$, $F_3$) which are travelling in front,
a is the setpoint acceleration of the controlled vehicle ($F_0$) which is included in the prediction as a parameter,
$f_0(a)$ is an evaluation function which is assigned to the controlled vehicle ($F_0$) and which is dependent on the differential amount between the predicted speed ($v_0(a)$) of the controlled vehicle ($F_0$) and a desired speed ($v_{ref}$) which is predefined by the driver,
$f_i(a)$ is an evaluation function which is assigned to the i-th other vehicle ($F_i$) which is travelling in front, which evaluation function is dependent on the predicted undershooting of the safety distance ($d_{min}$) of the controlled vehicle ($F_0$) from the i-th other vehicle ($F_i$) which is travelling in front,
$Q_0$ is a weighting factor which is assigned to the controlled vehicle ($F_0$),
$Q_i$ is a weighting factor which is assigned to the i-th other vehicle ($F_i$) which is travelling in front.

6. Method according to claim 5, **characterized in that** the evaluation function $f_i(a)$ which is assigned to the i-th other vehicle ($F_i$) corresponds to the rule

$$f_i(a) \ = \ \left| d_{min} \ - \ d_i(a) \right|^k$$

where

$d_{min}$ represents the safety distance ($d_{min}$) of the controlled vehicle ($F_0$) from a vehicle which is travelling in front,
$d_i(a)$ represents the predicted longitudinal distance ($d_{1l}(a)$, $d_{2l}(a)$, $d_{3l}(a)$) of the controlled vehicle ($F_0$), dependent on the setpoint acceleration (a) of the controlled vehicle ($F_0$), from the i-th other vehicle ($F_i$),
k represents an exponent where $k \geq 1$.

7. Method according to Claim 5 or 6, **characterized in that** the weighting factor ($Q_i$) which is assigned to the i-th other vehicle ($F_i$) is set to a predefined positive value if the i-th other vehicle ($F_i$) is relevant to the controlled vehicle ($F_0$) and is otherwise set to the value zero.

8. Method according to one of Claims 5 to 7, **characterized in that** the evaluation function $f_0(a)$ which is assigned to the controlled vehicle ($F_0$) corresponds to the rule

$$f_0(a) \ = \ \left| v_0(a) \ - \ v_{ref} \right|^j$$

where

$v_{ref}$ represents the desired speed which is predefined by the driver of the controlled vehicle ($F_0$),
$v_0(a)$ represents the predicted speed, dependent on the setpoint acceleration (a) of the controlled vehicle ($F_0$),

of the controlled vehicle ($F_0$),

j represents an exponent where $j \geq 1$.

9. Method according to one of Claims 5 to 8, **characterized in that** the weighting factor ($Q_0$) which is assigned to the controlled vehicle ($F_0$) is predefined as a function of a desired control speed with which the speed of the controlled vehicle ($F_0$) is to be adjusted to the desired speed ($v_{ref}$) when the roadway is free.

10. Method according to one of Claims 5 to 9, **characterized in that** the acceleration setpoint value ($a_{soll}$) is limited to technically realizable values and the change in the acceleration setpoint value is limited to a predefined maximum value.

11. Method according to one of the preceding claims, **characterized in that** the method steps a to c are repeated for a predefined number of times before the method step d is carried out.

**Revendications**

1. Procédé de réglage de la vitesse de déplacement d'un véhicule ($F_0$) en tenant compte d'autres véhicules précédents ($F_1$, $F_2$, $F_3$) dont la position respective ($d_{1s}$, $d_{2s}$, $d_{3s}$, $d_{1l}$, $d_{2l}$, $d_{3l}$) et la vitesse ($V_{1s}$, $V_{2s}$, $V_{3s}$, $v_{1l}$, $v_{2l}$, $v_{3l}$), par rapport au véhicule réglé ($F_0$), sont déterminées comme des paramètres de déplacement, comprenant l'étape suivante, à savoir :

    (a) la prédiction de la future situation de circulation à l'aide des paramètres de déplacement ($d_{1s}$, $d_{2s}$, $d_{3s}$, $d_{1l}$, $d_{2l}$, $d_{3l}$, $v_{1s}$, $v_{2s}$, $v_{3s}$, $v_{1l}$, $v_{2l}$, $v_{3l}$) des autres véhicules précédents ($F_1$, $F_2$, $F_3$), en fonction de l'accélération théorique (a) du véhicule réglé ($F_0$) pouvant être prédéfinie comme paramètre libre,
    **caractérisé par** des étapes de procédé suivantes, à savoir :
    (b) l'évaluation de la future situation de circulation à l'aide d'une fonction de coût (J(a)) qui est définie de matière telle, que sa valeur augmente avec le nombre des autres véhicules précédents ($F_1$, $F_2$, $F_3$) et importants pour le véhicule réglé ($F_0$), et augmente avec l'importance de ces autres véhicules ($F_1$, $F_2$, $F_3$),
    (c) la détermination d'une valeur théorique d'accélération ($a_{soll}$) prise comme valeur de l'accélération théorique (a) du véhicule réglé ($F_0$), valeur théorique dans laquelle la fonction de coût (J(a)) prend une valeur minimum,
    (d) le réglage de l'accélération du véhicule réglé ($F_0$), sur la valeur théorique d'accélération ($a_{soll}$).

2. Procédé selon la revendication 1, **caractérisé en ce que** de tels autres véhicules ($F_1$, $F_2$, $F_3$) sont considérés comme importants, véhicules autres qui précèdent le véhicule réglé ($F_0$), dans sa voie de circulation ($S_M$), suivant une distance dépassant la limite inférieure de la distance de sécurité ($d_{min}$), et **en ce que** l'importance de ces autres véhicules augmente avec un dépassement croissant de la limite inférieure de la distance de sécurité ($d_{min}$).

3. Procédé selon la revendication 2, **caractérisé en ce que** de tels autres véhicules ($F_1$, $F_2$, $F_3$) sont considérés également comme importants, véhicules autres qui, dans une voie de circulation voisine plus rapide ($S_L$), précèdent le véhicule réglé ($F_0$).

4. Procédé selon l'une quelconque des revendications précédentes, **caractérisé en ce que** l'accélération des autres véhicules précédents ($F_1$, $F_2$, $F_3$) est déterminée comme autre paramètre de déplacement de ces véhicules, et sert de base à la prédiction de la situation de circulation.

5. Procédé selon l'une quelconque des revendications précédentes, **caractérisé en ce que** la fonction de coût (J(a)) est définie conformément à la relation

$$J(a) \; = \; Q_0 \bullet f_0(a) \; + \; \sum_{i=1}^{i=n} \; (Q_i \bullet f_i(a))$$

où

    i est un indice identifiant les autres véhicules précédents ($F_1$, $F_2$, $F_3$),
    a est l'accélération théorique du véhicule réglé ($F_0$), entrant comme paramètre dans la prédiction,

$f_0(a)$ est une fonction d'évaluation affectée au véhicule réglé ($F_0$), qui dépend de l'ampleur de la différence entre la vitesse de dépassement prédite ($v_0(a)$) du véhicule réglé ($F_0$), et une vitesse souhaitée ($v_{ref}$) prédéfinie par le conducteur,

$f_i(a)$ est une fonction d'évaluation affectée au énième autre véhicule précédent ($F_i$), qui dépend du dépassement prédit de la limite inférieure de la distance de sécurité ($d_{min}$) du véhicule réglé ($F_0$), par rapport au énième autre véhicule précédent ($F_i$),

$Q_0$ est un facteur de pondération affecté au véhicule réglé ($F_0$),

$Q_i$ est un facteur de pondération affecté au énième autre véhicule précédent ($F_i$).

6. Procédé selon la revendication 5, **caractérisé en ce que** la fonction d'évaluation $f_i(a)$, affectée au énième autre véhicule ($F_i$), correspond à la réglementation

$$f_i(a) = \left| d_{min} - d_i(a) \right|^k$$

où

$d_{min}$ représente la distance de sécurité ($d_{min}$) du véhicule réglé ($F_0$), par rapport à un véhicule précédent,

$d_i(a)$ représente la distance longitudinale ($d_{1l}(a)$, $d_{2l}(a)$, $d_{3l}(a)$) du véhicule réglé ($F_0$), par rapport au énième autre véhicule ($F_i$), prédite en fonction de l'accélération théorique ($a$) du véhicule réglé ($F_0$),

$k$ représente un exposant avec $k$ supérieur ou égal à 1.

7. Procédé selon la revendication 5 ou 6, **caractérisé en ce que** le facteur de pondération ($Q_i$) affecté au énième autre véhicule ($F_i$) est réglé sur une valeur positive prédéfinie, lorsque le énième autre véhicule ($F_i$) est important pour le véhicule réglé ($F_0$) et, sinon, ledit facteur de pondération est réglé sur la valeur de zéro.

8. Procédé selon l'une quelconque des revendications 5 à 7, **caractérisé en ce que** la valeur d'évaluation $f_0(a)$ affectée au véhicule réglé ($F_0$) correspond à la réglementation

$$f_0(a) = \left| v_0(a) - v_{ref} \right|^j$$

où

$v_{ref}$ représente la vitesse souhaitée prédéfinie par le conducteur du véhicule réglé ($F_0$),

$v_0(a)$ représente la vitesse de déplacement du véhicule réglé ($F_0$), prédite en fonction de l'accélération théorique ($a$) du véhicule réglé ($F_0$),

$j$ représente un exposant avec $j$ supérieur ou égal à 1.

9. Procédé selon l'une quelconque des revendications 5 à 8, **caractérisé en ce que** le facteur de pondération ($Q_0$) affecté au véhicule réglé ($F_0$) est prédéfini en fonction d'une vitesse de réglage souhaitée avec laquelle la vitesse de déplacement du véhicule réglé ($F_0$) doit être réglée sur la vitesse souhaitée ($v_{ref}$), lorsque la voie de circulation est libre.

10. Procédé selon l'une quelconque des revendications 5 à 9, **caractérisé en ce que** la valeur d'accélération théorique ($a_{soll}$) est limitée à des valeurs techniquement réalisables, et la modification de la valeur théorique d'accélération est limitée à une valeur maximum prédéfinie.

11. Procédé selon l'une quelconque des revendications précédentes, **caractérisé en ce que** les étapes du procédé a à c sont répétées, un nombre de fois prédéfini, avant l'exécution de l'étape d du procédé.

Fig. 1

START

100 → Ermittlung der Bewegungsparameter
der vorausfahrenden Fremdfahrzeuge

110 → Prädiktion der Verkehrssituation
mit der Sollbeschleunigung a des
geregelten Fahrzeugs als Parameter

120 → Aufstellen einer Kostenfunktion
$J(a)$ für die prädizierte
Verkehrssituation

130 → Ermittlung von $a_{soll}$ mit
$J(a_{soll}) = \mathrm{Min}(J(a))$

Iteration beenden? — 140

Nein

Ja

150 → Regelung der Beschleunigung
auf $a_{soll}$

**Fig. 2**